# EUROPEAN PATENT SPECIFICATION

(11) **EP 0 567 500 B1**
(45) Date of publication and mention of the grant of the patent: **27.09.1995**
(21) Application number: 92902698.7
(22) Date of filing: 16.01.1992
(51) Int. Cl.: H02K 9/04, H02K 41/025

(54) **COOLING SYSTEM FOR LINEAR INDUCTION MOTOR**
KÜHLUNGSSYSTEM FÜR LINEARE INDUKTIONSMOTOREN
SYSTEME DE REFROIDISSEMENT POUR UN MOTEUR A INDUCTION LINEAIRE

(30) Priority: 16.01.1991 CA 2034277
(43) Date of publication of application: 03.11.1993
(73) Proprietor: BOMBARDIER INC., Montreal, Quebec H3B 1Y8 (CA)
(72) Inventor: GILMORE, David C. Chung Shan N. Road,, Taipei Taiwan 00736 (CN); STANNARD, John, Kingston, Ontario K7N 5X2 (CA); VOLLENWYDER, Kurt, Kingston, Ontario K7N 3Y8 (CA)
(74) Representative: Weitzel, Wolfgang, Dr.-Ing. Patentanwalt
(86) International application number: CA9200022
(87) International publication number: WO9213382

(56) References cited:
- EP-A- 0 174 783
- US-A- 3 460 485
- US-A- 4 131 812
- US-A- 4 598 223
- PATENT ABSTRACTS OF JAPAN vol. 4, no. 91 (E-17)(573) 28 June 1980 & JP-A 55 056 446
- PATENT ABSTRACTS OF JAPAN vol. 14, no. 302 (E-946)(4245) 28 June 1990 & JP-A 2 097 266
- PATENT ABSTRACTS OF JAPAN vol. 13, no. 113 (E-729)(3461) 17 March 1989 & JP-A 63 283 460
- PATENT ABSTRACTS OF JAPAN vol. 10, no. 248 (E-431)(2304) 26 August 1986 & JP-A 61 076 043

## Description

### COOLING SYSTEM FOR LINEAR INDUCTION MOTOR

The present invention relates to linear induction motors and in particular to a means to improve cooling thereof.

Linear induction motors are widely used in a number of industries and present certain advantages over rotary motors, particularly where propulsion along a predetermined path or guideway is required. An application in which linear induction motors have enjoyed commercial success is the transportation industry where they have been used to provide the propulsion system for transit vehicles.

The constraints placed on the design of the linear induction motor in these particular applications have required that careful attention be paid to cooling of the motor. This is because the motor has to be located within a relatively congested area of the vehicle and at the same time must be appropriately shielded to permit its use in a public environment.

U.S. Patent 4,642,493 issued November 10, 1987 and assigned to the assignee of the present application addresses the issue of providing adequate cooling for the end turns of the windings of the linear induction motor. This is provided by locating fans outward of the central core to force air over the end turns of the motor. This approach has been successful in improving the performance of the linear induction motor, although it is desirable to provide for further extraction of the heat generated during operation particularly in the central core of the motor.

It is therefore an object of the present invention to provide an improved cooling system for a linear induction motor.

According to the present invention, there is provided a primary for a linear induction motor comprising a core having a plurality of slots in one face thereof, a housing on each side of said core, motor windings located in said slots and having end turns extending laterally beyond said core and into said housing, a plenum chamber on the opposite side of said core to said one face, a fan to supply cooling air to the plenum chamber, apertures in longitudinal surfaces of said plenum chamber adjacent the opposite surface of said core and above said end turns to permit air to flow out of said plenum chamber and into said housings, and outlet means in said housing to permit egress of air from the housing characterized in that said outlet means is located opposite to said apertures and that deflector means overlie said apertures and extend downwardly to an upper surface of said end turns to direct air flowing from said apertures to said outlet to pass between said end turns.

In a preferred embodiment, the fins extend from the opposite side of the core in a direction parallel to the slots and are formed as castellations of individual laminations that constitute the core. In this manner, increased surface area and adequate ducting of the cooling air is provided.

An embodiment of the invention will now be described by way of example only with reference to the accompanying drawings, in which
Figure 1 is a perspective view of a linear induction motor primary;
Figure 2 is a perspective view of the motor of Figure 1 taken from the underside with portions removed for clarity;
Figure 3 is a view on the line 3-3 of Figure 1; and
Figure 4 is a view on the line 4-4 of Figure 3.

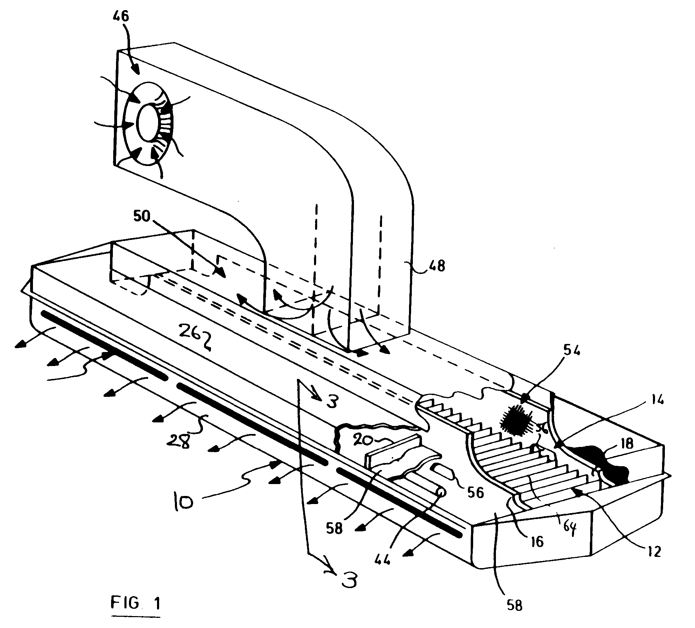

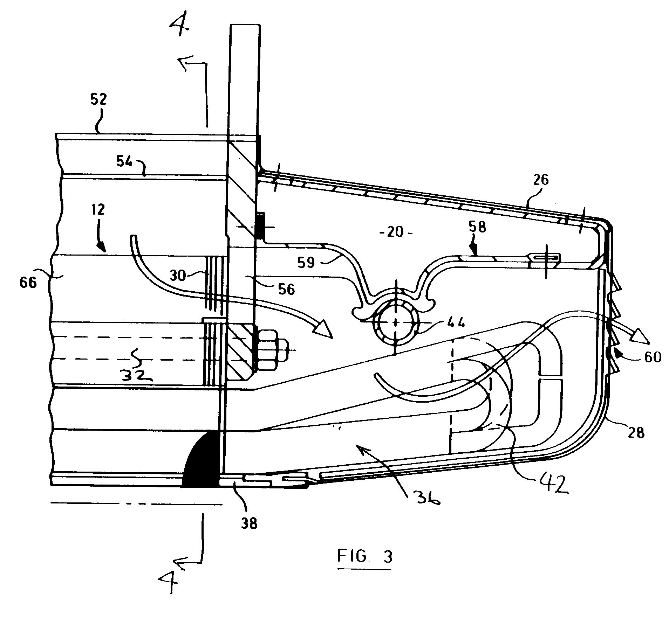

Referring now to Figures 1-3, a primary of a linear induction motor 10 comprises a core 12 supported in a frame 14 for attachment to the underside of vehicle (not shown). The frame 14 comprises a pair of longitudinal frame members 16,18 and outriggers 20 extending laterally from each side of the frame members 16,18. Outriggers 20 serve to support the side covers 26,28 that define a housing 29 on either side of the core 12.

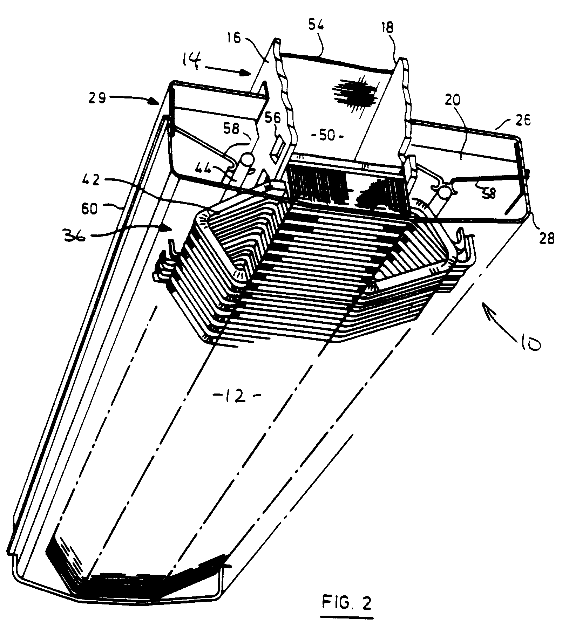

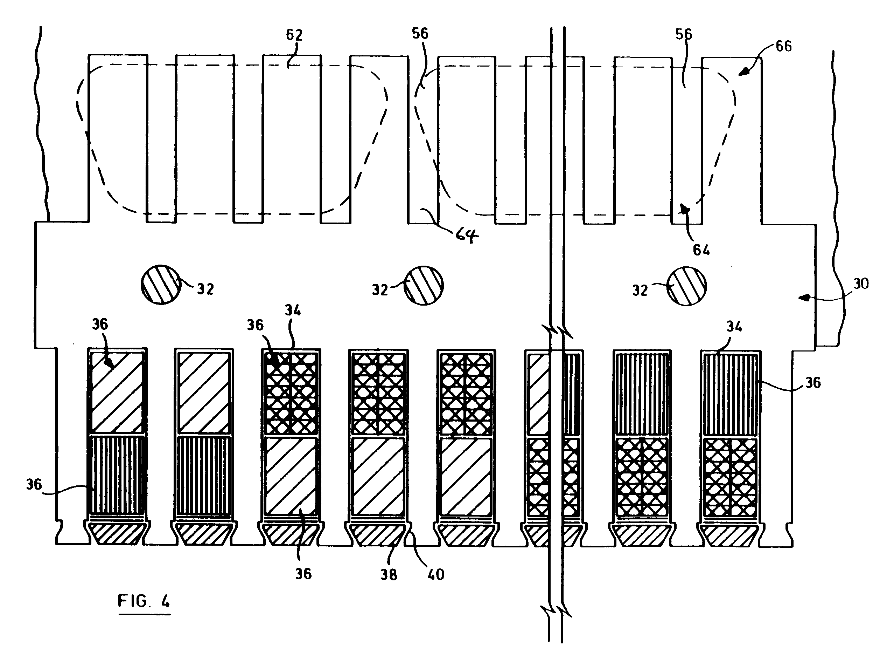

The core 12 is formed from a plurality of longitudinal extending laminations 30 which are secured to the frame members 16,18 by bolts 32. The bolts 32 are located at spaced intervals along the length of the frame members 16,18 and serve to hold the laminations in close proximity. As can best be seen in Figure 4, each of the laminations 30 has a series of rectangular slots 34 spaced along its length to accomodate motor windings 36. The windings 36 are helically wound in a three-phase winding as more fully described in the above referenced U.S. Patent 4,642,493. The windings 36 are secured within the slots 34 by keys 38 co-operating with dovetail formations 40 at the lower end of each of the slots 34. As can be seen in Figure 2, each of the windings 36 projects laterally beyond the core 12 and has direction reversing end turns 42 supported within the covers 26,28 by a circular longitudinal bar 44 secured to the outriggers 20.

Referring once again to Figure 1, a fan 46 is mounted above the core 12 and between the frame members 16,18 and serves to provide cooling air to the upper surface of the core 12. Fan 46 delivers cooling air through a duct 48 into a plenum 50 extending the length of the primary. Duct 48 is located as close to the centre of the core 12 as practical to assist in uniform air distribution. Plenum 50 is defined between the frame members 16,18, the upper surface of core 12, and a cover 52. A diffuser screen 54 is located in the plenum between the upper surface of core 12 and the cover 52 to distribute uniformly air delivered through the duct 48.

The side frames 16,18 each have a series of apertures 56 uniformly spaced along the length of the primary and allowing communication between the plenum 50 and housing 29. In order to provide cooling flow of air over the end turns 42, a deflector plate 58 is located between each outrigger and extends from the side frames 16,18 to the side covers 26,28. The baffle 58 has a portion 59 extending outwardly and downwardly from the respective frame members 16,18. The portion 59 extends from above and across the apertures 56 so that air passing through the apertures is deflected downwardly between the end turns. Baffle 58 is supported between the outriggers 20 by the bar 44 that cooperates with the baffle 58 to provide a barrier extending the length of the core 12. This ensures that air passing through the apertures 56 passes between the end turns 42 before exiting the housing by elongate exhaust slots 60 in the side cover 28. The location of the slots causes the air to flow upwardly and outwardly from the housing 28 and at the same time inhibits ingress of water and dust. Baffle 58 and bar 44 are formed from a nonconducting material such as fibreglass laminations.

To promote efficient cooling of the core 12 and as may be seen in Figure 4, each of the laminations 30 is formed with a castellated edge 62. Accordingly, when the laminations 30 are assembled and installed between the frame members 16,18, alternating transversely extending passageways 64 and fins 66 are formed in a direction parallel to the slots 34. The castellations 62 provide an increased surface area for the upper surface of the core 12 and direct air to flow through the passageways 64 toward the apertures 56. Apertures 56 are positioned to overlap the fins 66 and thereby cause the air to flow along the passageways 64 to the housing.

In operation, therefore, air supplied from the fan 42 is uniformly distributed over the upper surface of core 12 by the diffuser. The surface area of the core 12 is increased by fins 66 to improve the heat transfer to the air that flows out of plenum and into the housing 29 through apertures 56. The efficient cooling of end turns 44 is provided by the deflector plates 58 which cause the air to pass between the end turns as it moves to the exit slots 60.

## Claims

1. A primary (10) for a linear induction motor comprising a core (12) having a plurality of slots (34) in one face thereof, a housing (20) on each side of said core (12), motor windings (36) located in said slots (34) and having end turns (42) extending laterally beyond said core (12) and into said housing (29), a plenum chamber (50) on the opposite side of said core (12) to said one face, a fan (46) to supply cooling air to the plenum chamber (50), apertures (56) in longitudinal surfaces (16,18) of said plenum chamber (50) adjacent the opposite surface of said core (12) and above said end turns (42) to permit air to flow out of said plenum chamber (50) and into said housings (29), and outlet means (60) in said housing (29) to permit egress of air from the housing (29) characterized in that said outlet means (60) is located opposite to said apertures (56) and that deflector means (58) overlie said apertures (56) and extend downwardly to an upper surface of said end turns (42) to direct air flowing from said apertures (56) to said outlet (60) to pass between said end turns (42).

2. A primary according to claim 1 wherein a diffuser (54) is provided in said plenum chamber (50) to distribute uniformly air from the fan (46) along the core (12).

3. A primary according to claim 1 or 2 wherein laterally extending fins (66) are provided on said opposite face.

4. A primary according to claim 3 wherein said core (12) is formed from laminations (30) and said fins (66) are integrally formed along one edge of said laminations (30).

5. A primary according to claim 3 or 4 wherein said fins (66) extend upwardly beyond said apertures (56).

6. A primary according to any preceding claim wherein a barrier (44) extends along said housing (29) adjacent said end turns (42) to provide support therefore and said deflector means (58) extends to the barrier (44) to cause air to flow between said end turns (42).

7. A primary according to claim 6 wherein said deflector means (58) is located between outriggers (20) extending laterally from said housing (29) and said barrier (44).

## Patentansprüche

1. Primärseite (10) für einen Linearinduktionsmotor, umfassend einen Kern (12) mit einer Mehrzahl von Schlitzen in dessen einer Seitenfläche, ein Gehäuse (20) beidseits des Kernes (12), Motorwicklungen (36), die in den Schlitzen (34) angeordnet sind, mit Endwindungen (42), die sich seitlich über den Kern (12) hinaus und in das Gehäuse (29) hinein erstrecken, mit einer Plenum-Kammer (50) auf der der genannten Seitenfläche gegenüberliegenden Seite des Kernes (12), mit einem Gebläse (46) zum Zuführen von Kühlluft zur Plenum-Kammer (50), mit Öffnungen (56) in den Längsseitenflächen (16, 18) der genannten Plenum-Kammer (50) in der Nähe der gegenüberliegenden Fläche des Kernes (12) und oberhalb der Endwindungen (42) zum Durchtritt einer Luftströmung aus der Plenum-Kammer (50) und in das Gehäuse (29), und einen Auslaß (60) im Gehäuse (29) zum Ermöglichen des Austritts von Luft aus dem Gehäuse (29),
dadurch gekennzeichnet, daß der Auslaß (60) gegenüber den Öffnungen (56) angeordnet ist, daß sich Deflektoren (58) über die Öffnungen (56) hinweg und nach unten gegen eine obere Fläche der Endwindungen (42) hinweg erstrecken, um aus den Öffnungen (56) gegen den Auslaß (60) hin zu richten, um zwischen den Endwindungen (42) hindurchzutreten.

2. Primärseite nach Anspruch 1, wobei ein Diffusor (54) in der Plenum-Kammer (50) angeordnet ist, um die aus dem Gebläse (46) kommende Luft gleichmäßig entlang des Kerns (12) zu verteilen.

3. Primärseite nach Anspruch 1 oder 2, wobei sich seitlich erstreckende Rippen (66) auf den beiden einander gegenüberliegenden Flächen angeordnet sind.

4. Primärseite nach Anspruch 3, wobei der Kern (12) aus Laminierungen (30) gebildet ist, und die Rippen (66) einteilig entlang einer Kante der Laminierungen (30) gebildet sind.

5. Primärseite nach den Ansprüchen 3 und 4, wobei sich die Rippen (66) nach oben über die Öffnungen (56) hinaus erstrecken.

6. Primärseite nach einem der vorausgegangenen Ansprüche, wobei sich eine Barriere (44) entlang des Gehäuses (29) im Bereich der Endwindungen (42) erstreckt, um einen Träger hierfür zubilden, und wobei sich die Deflektoren (58) zur Barriere (44) hin erstrecken, um die Luft dazu zu veranlassen, zwischen den Endwindungen (42) hindurchzuströmen.

7. Primärseite nach Anspruch 6, wobei der Deflektor (58) zwischen Auslegerstützen (20), die sich seitlich vom Gehäuse (29) aus erstrecken, und der Barriere (44) angeordnet sind.

## Revendications

1. Primaire (10) pour moteur à induction linéaire comprenant un noyau (12) muni d'une pluralité de fentes (34) dans une face de celui-ci, un carter (20) de chaque côté du noyau (12), des enroulements de moteur (36) placés dans les fentes (34) et dont les spires d'extrémités (42) s'étendent latéralement au-delà du noyau (12) et dans le carter (29), une chambre de ventilation (50) du côté opposé du noyau (12) par rapport à la première face ci-dessus, un ventilateur (46) pour fournir de l'air de refroidissement à la chambre de ventilation (50), des ouvertures (56) formées dans les surfaces longitudinales (16, 18) de la chambre de ventilation (50) au voisinage de la surface opposée du noyau (12) et au-dessus des spires d'extrémités (42) pour permettre à l'air de sortir de la chambre de ventilation (50) et de pénétrer dans le carter (29), et des moyens de sortie (60) formés dans le carter (29) pour permettre à l'air de sortir de ce carter (29), caractérisé en ce que les moyens de sortie (60) sont placés à l'opposé des ouvertures (56), et en ce que des moyens de déflecteur (58) recouvrent les ouvertures (56) et s'étendent vers le bas en direction de la surface supérieure des spires d'extrémités (42) pour diriger l'air sortant des ouvertures (56) vers la sortie (60) de façon que cet air passe entre les spires d'extrémités (42)

2. Primaire selon la revendication 1, caractérisé en ce qu'un diffuseur (54) est monté dans la chambre de ventilation (50) pour répartir uniformément le long du noyau (12) l'air provenant du ventilateur (46).

3. Primaire selon la revendication 1 ou 2, caractérisé en ce que des ailettes dirigées latéralement (66) sont formées sur la face opposée.

4. Primaire selon la revendication 3, caractérisé en ce que le noyau (12) est formé de lamelles (30) et en ce que les ailettes (66) sont formées d'un seul tenant le long d'un bord de ces lamelles (30).

5. Primaire selon la revendication 3 ou 4, caractérisé en ce que les ailettes (66) s'étendent vers le haut au-delà des ouvertures (56).

6. Primaire selon l'une quelconque des revendications précédentes, caractérisé en ce qu'une barrière (44) s'étend le long du carter (29) au voisinage des spires d'extrémités (42) pour fournir un support à celles-ci, et en ce que les moyens de déflecteur (58) s'étendent jusqu'à la barrière (44) pour produire l'écoulement de l'air entre ces spires d'extrémités (42).

7. Primaire selon la revendication 6, caractérisé en ce que les moyens de déflecteur (58) sont placés entre des pièces en saillie (20) partant latéralement du carter (29) et de la barrière (44).
